Europäisches Patentamt

European Patent Office

Office européen des brevets

(11) Veröffentlichungsnummer: **0 066 160**
**B1**

(12) **EUROPÄISCHE PATENTSCHRIFT**

(45) Veröffentlichungstag der Patentschrift:
03.10.84

(21) Anmeldenummer: 82104269.4

(22) Anmeldetag: 15.05.82

(51) Int. Cl.³: **E 04 H 13/00**

(54) **Gedenkstein.**

(30) Priorität: **03.06.81 DE 3121949**

(43) Veröffentlichungstag der Anmeldung:
**08.12.82 Patentblatt 82/49**

(45) Bekanntmachung des Hinweises auf die Patenterteilung:
**03.10.84 Patentblatt 84/40**

(84) Benannte Vertragsstaaten:
**AT BE CH DE FR GB IT LI LU NL SE**

(56) Entgegenhaltungen:
**DE - C - 580 601
DE - U - 1 987 368
DE - U - 7 923 064
US - A - 1 982 432**

(73) Patentinhaber: **Kühl Bauelemente GmbH,
Rensingstrasse 5-9, D-4630 Bochum (DE)**

(72) Erfinder: **Schlösser, Helmut, Heimannstrasse 48,
D-4250 Bottrop (DE)**

(74) Vertreter: **Schulte, Jörg, Dipl.-Ing., Hauptstrasse 2,
D-4300 Essen-Kettwig (DE)**

ACTORUM AG

**Beschreibung**

Die Erfindung betrifft einen Gedenkstein, insbesondere Grabstein für Grabstätten und Einzelgräber, dessen aus Metall gefertigter, aus mindestens einem Hohlkörper bestehender Korpus mit einer Deckplatte, einem Boden und einer verschliessbaren Ausnehmung oder Öffnung versehen ist.

Derartige Grabmäler, Gedenksteine bzw. Grabsteine wurden und werden auch heute noch in der Regel aus Naturstein herausgemeisselt und dann auf vorher hergestellten, meist aus Beton gegossenen Sockeln auf den Grabstätten und Gräbern aufgestellt. Die Tafeln und Schriftflächen sollen einmal an die dort bestatteten Personen erinnern und zum anderen den Gesamteindruck der Grabstätte positiv beeinflussen. Die Gedenksteine werden auf Friedhöfen in der Regel im Hintergrund der Grabstätten positioniert und können aufgrund ihres grossen Gewichtes nur mit Hilfe entsprechend stark ausgelegter Hebelgeräte und Transporter aufgestellt oder auch demontiert werden. Aufgrund ihrer naturgegebenen Oberfläche aber auch bei behandelter Oberfläche treten sehr häufig Veränderungen der Oberfläche auf, die den Grabstein bzw. Gedenkstein unscheinbar werden lassen, so dass häufig nach einiger Zeit die Schriftzüge nicht mehr zu identifizieren sind. Die Fläche vor dem Gedenkstein wird häufig mit grosser Liebe und Sorgfalt mit Blumen und sonstigen Pflanzen besetzt und gepflegt. Das dazu benötigte Werkzeug sowie Giesskannen und weitere Geräte müssen jedesmal mitgebracht oder aber hinter dem Gedenkstein verborgen werden. Häufig werden diese Geräte und Werkzeuge von Dritten entfernt und mitgenommen. Da die Gräber vielfach von älteren Personen gepflegt werden, denen die Mitnahme der Geräte und Werkzeuge schwer fällt, ist der Verlust dieser Teile besonders schmerzlich. Nachteilig ist darüber hinaus, dass derartige Gedenksteine jeweils in Einzelfertigung hergestellt werden und daher sehr kostspielig sind.

Aus der DE-A Nr. 1908494 ist ein Gedenkstein bekannt, dessen Korpus aus Metall, wie Kupfer, Messing, Aluminium oder Eisen hergestellt ist, und der einen Hohlraum aufweist, in dem die Grabutensilien untergebracht werden können und dessen Oberteil kippbar ausgebildet ist, um den Hohlraum jeweils zu verschliessen. Derartige Kippgrabsteine sind sehr aufwendig, da über ein entsprechendes Hebelgestänge erreicht werden muss, dass das gesamte Oberteil jeweils möglichst ohne grosse Kraftaufwendung verschwenkt werden kann. Das Hebelsystem, das in den Hohlraum eingreift, nimmt Stapelraum in Beschlag und engt daher das Reservoir für die Grabpflegeutensilien wesentlich, wenn nicht sogar gänzlich ein. Aufgrund dieses Hebelsystems und der besonderen Ausbildung von Ober- und Unterteil, wobei diese auch häufig aus Stein hergestellt sind, ist eine industrielle Herstellung derartiger Gedenksteine nicht machbar. Die DE-U Nr. 1987368 betrifft einen Gedenkstein, dessen Korpus aus zwei miteinander verbindbaren Halbschalen besteht. Diese Halbschalen aus Gussmaterial oder Aluminiumblech werden so miteinander verbunden, dass sie einen Hohlraum bilden, ohne dass dieser Hohlraum für andere Zwecke vorgesehen ist. Aus dem Zusammenhang ist zu ersehen, dass es sich bei diesen Elementen nicht um durch Kantung stabilisierte Bleche handelt, sondern eben aus Halbschalen, die vor allem gespritzt oder gegossen werden sollen. Die besondere Formgebung, die notwendig ist, um die beiden Halbschalen anschliessend zusammenzubringen, erfordert eine aufwendige Herstellung und verhindert eine industrielle vorteilhafte Herstellungsweise.

Die US-A Nr. 1982432 zeigt ebenso wie die DE-C Nr. 580601 einen Gedenkstein mit einem Hohlraum, in dem eine Bewässerungseinrichtung untergebracht ist, bzw. der als Wasserreservoir verwendet wird. Auch diese Einrichtungen sind entweder aus dem Stein herausgearbeitet, was einen erheblichen Arbeitsaufwand darstellt oder so aufwendig hergestellt, dass sie zu vernünftigen Bedingungen, Preisen und vor allem dem individuellen Geschmack anpassbar nicht herzustellen sind.

Ein weiterer Gedenkstein, dessen aus Metall gefertigter Korpus aus einem Hohlkörper mit Deckplatte und Boden besteht und dessen Hohlraum zur Beschickung mit Grabpflegeutensilien vorgesehen ist, wird in der DE-U Nr. 7923064 beschrieben. Der aus Metall gefertigte Korpus besteht aber aus einzelnen Blechen und kann auch deshalb nicht günstig industriell hergestellt werden, weil in der Rückwand eine Ausnehmung vorgesehen ist, die über eine Klappe o.ä. verschlossen werden kann. Die Ausbildung ermöglicht es insbesondere nicht, den Gedenkstein so auszubilden, dass er dem jeweiligen Geschmack des Eigentümers bzw. der Friedhofsverwaltung genügt.

Der Erfindung liegt die Aufgabe zugrunde, einen Gedenkstein mit einem verschliessbaren Hohlraum für Grabpflegegeräte und/oder Giesswasser zu schaffen, der industriell einfach herstellbar und dennoch den individuellen Wünschen anpassbar und der vor allem von älteren Menschen einfach zu handhaben ist.

Die Aufgabe wird gemäss der Erfindung dadurch gelöst, dass der Korpus aus einem stabilen abgekanteten Blechstreifen besteht, der auf der Vorderwand Einfassungen für vorzugsweise eine Steinplatte bildend mehrfach gekantet und an der Stosskante verbunden ist und dass die die obere Ausnehmung verschliessende Deckplatte mit dem Korpus klappbar verbunden ist.

Ein derartiger Gedenkstein erfüllt überraschend sowohl die geschmacklichen Bedürfnisse und Vorschriften als auch die Anforderungen an eine industrielle Herstellungsweise. Aus einem derartigen Blechstreifen können durch einfaches Abschneiden praktisch im Takt auf dem Fliessband Gedenksteine hergestellt werden, die einen oder mehrere Hohlkörper aufweisen und die so gekantet sind, dass der gesamte Korpus dadurch stabilisiert ist und beispielsweise eine Steinplatte aufnehmen kann, die sowohl den Gesamteindruck optimiert als auch zur Aufnahme der Beschriftung dient. Ein derart gekantetes Blech ist preiswert, daraus ist einfach ein entsprechender Korpus herzustellen, der Korpus weist ein geringes Gewicht auf und der gesamte Korpus ist durch das Kanten so stabilisiert, dass er in sich standfest ist und sogar als Halterung für entsprechende andere Werkstoffe und Platten dienen kann. Dabei ist der Hohlkörper bzw. der gebildete Hohlraum in vorteilhafter Weise und vollständig mit Gerätschaften zu beschicken, da diese von oben eingeführt werden und der gesamte Hohlraum für die Aufnahme entsprechender Gerätschaften zur Verfügung steht, da ein aufwendiger Verschwenk- oder Kippmechanismus nicht benötigt wird.

Nach einer Ausbildung der Erfindung ist vorgesehen, dass der Blechstreifen unter Bildung zweier, auf der Vorderwand eine Ausnehmung für die Steinplatte freilassender und Hohlräume bildender Säulen gekantet ist und dass auf den Seitenwänden im Abstand dazu verstellbare Winkelstücke vorgesehen sind. Eine derartige Ausbildung erleichtert das Kombinieren mit der Steinplatte oder anderen, die Beschriftung aufnehmenden Platten und bietet darüber hinaus den grossen Vorteil, mehrere Hohlräume vorzuhalten, die für unterschiedliche Zwecke, d.h. als Wasserreservoir bzw. zur Aufnahme der Gerätschaften zur Verfügung stehen. Auch bietet die Vorhaltung verschiedener Hohlräume den Vorteil, dass sie beispielsweise zur Aufnahme von Lichtern o.ä., wie an sich bekannt, und als Wasserbehälter zur Verfügung stehen, so dass das Innere des Gedenksteins in vorteilhafter Weise für unterschiedlichste Zwecke Anwendung bzw. Verwendung findet. Die Winkelstücke, die verstellbar angeordnet sind, dienen zum Festlegen der Gedenk- oder Steinplatte und sind auch für den Laien einfach zu handhaben.

Nach einer weiteren Ausbildung der Erfindung ist vorgesehen, dass das Blech ein 3 bis 7,5 mm, vorzugsweise 5 mm Aluminiumblech ist, das mit einseitig strukturierter Oberfläche gewalzt und dann an den Stosskanten verschweisst ist. Der Werkstoff Aluminium zeichnet sich durch eine charakteristische Oberfläche aus, die je nach der Zusammensetzung auch einen bleibenden, geschmacklich hervorragenden Eindruck macht. Insbesondere beim Aluminiumblech kann die Oberfläche sowohl in der Struktur als auch in der Farbe in weiten Bereichen beeinflusst und damit dem unterschiedlichen Geschmack der Käufer angepasst werden. Geeignet ist auch Kupferblech, insbesondere dann, wenn eine gezielte Änderung des Aussehens des Gedenksteins gewünscht ist. Über die Verschweissung an den Stosskanten erhält der Korpus eine gleichmässige Stabilität und ist darüber hinaus ein abgedichteter Behälter, der ganz oder teilweise als Wasserreservoir zur Verfügung steht. Zur Erhaltung des Gesamteindrucks bzw. zur Erhaltung der Oberflächenfarbgebung ist es vorteilhaft, das Blech als fertigen Korpus nach dem Kanten zu eloxieren.

In wasserarmen Gegenden aber auch generell ist es zweckmässig, das Regenwasser aufzusammeln und für das Giessen der Blumen und Pflanzen vorzuhalten. Dies wird einfach und zweckmässig dadurch erreicht, dass der Deckel allseitig einen Überstand mit erhabenem Rand und eine zu einer Seite abfallende Deckfläche mit einer zum Hohlkörper durchführenden Abflussbohrung aufweist. Damit ist einmal eine vorteilhafte Stabilität der Deckplatte erreicht, zugleich wird die darunter befindliche Struktur und die Schriftplatte vor den Wettereinflüssen geschützt und schliesslich kann der auf die Deckplatte herabfallende Regen vorteilhaft gesammelt und in den Hohlkörper abgeleitet werden. Dabei ist es denkbar, einen der gebildeten Hohlkörper als Behältnis zu verwenden oder aber im gesamten Hohlkörper ein gesondertes Behältnis vorzusehen, in dem das Regenwasser aufgefangen wird. Dieser Regenwasserbehälter kann dann wie an sich bekannt dazu verwendet werden, die dem Grab zugeordneten Pflanzen und Blumen gleichmässig zu befeuchten, indem er über Rohrleitungen oder Schläuche mit den wichtigsten Pflanzen verbunden ist.

Ein grosses Bedürfnis der Benutzer ist das, die im Grabstein gelagerten Gerätschaften vor dem Zugriff Dritter zu bewahren. Daher ist erfindungsgemäss vorgesehen, dass die Deckplatte um ein dem Rand des Korpus zugeordnetes Scharnier klappbar und über eine auf der gegenüberliegenden Seite angeordnetes und über eine federbelastete Platte verdecktes Schloss in der unteren Endlage festlegbar ist. Durch dieses Festlegen ist dabei insbesondere auch gewährleistet, dass die Stabilität des Gedenksteines durch falsche Handhabung oder mutwillige Beeinflussung gestört oder gar zerstört wird.

Die Erfindung zeichnet sich insbesondere dadurch aus, dass ein industriell herstellbarer Gedenkstein geschaffen ist, der gleichzeitig die für die Grabpflege notwendigen Gerätschaften vorhält. So bietet der Gedenkstein Platz für die Gerätschaften und für eine Art Wassertank, über die normale Pflanzen und auch Hydrokulturen kontinuierlich bewässert werden können, so dass die Grabpflege dadurch insgesamt wesentlich erleichtert und die Erhaltung des Grabschmuckes gesichert ist. Durch die Möglichkeit, das Regenwasser aufzusammeln, ist ein Nachfüllen von Hand in der Regel nicht notwendig. Die Formgebung des Gedenksteins ist weitgehend freigestellt, wobei u.a. auch im Bereich der Vorderwand Nischen vorgesehen werden können, in die Blumen oder Beleuchtungen eingestellt werden. Diese Nischen können wiederum durch Gitter verschlossen werden, so dass die dahinterstehenden Blumen oder Lichter zwar sichtbar, aber vor dem Zugriff Unbefugter geschützt sind. Durch die Verwendung eines Blechstreifens und seine besondere Kantung unter gleichzeitiger Bildung einer Halterung für die Gedenkplatte bzw. Steinplatte kann diese leicht montiert und demontiert werden, so dass beispielsweise Ergänzungen oder Änderungen der Beschriftung ohne weiteres vorgenommen werden können und ohne grossen Aufwand.

Weitere Einzelheiten und Vorteile des Erfindungsgegenstandes ergeben sich aus der nachfolgenden Beschreibung der zugehörigen Zeichnung, in der bevorzugte Ausführungsbeispiele mit den dazu notwendigen Einzelheiten und Einzelteilen dargestellt sind. Es zeigen:

Fig. 1 einen Grabstein in perspektivischer Darstellung und geschlossener Bauweise,

Fig. 2 einen Grabstein mit durch ein Gitter verschlossener Ausnehmung,

Fig. 3 eine Draufsicht auf einen Grabstein mit abgenommenem Deckel gemäss Fig. 2,

Fig. 4 einen Gedenk- oder Grabstein mit eingesetzter Steinplatte,

Fig. 5 eine Gruppe von Grabsteinen mit Hydrokultur,

Fig. 6 einen Grabstein mit Grabplatte, und

Fig. 7 einen Schnitt im Bereich des Schlosses.

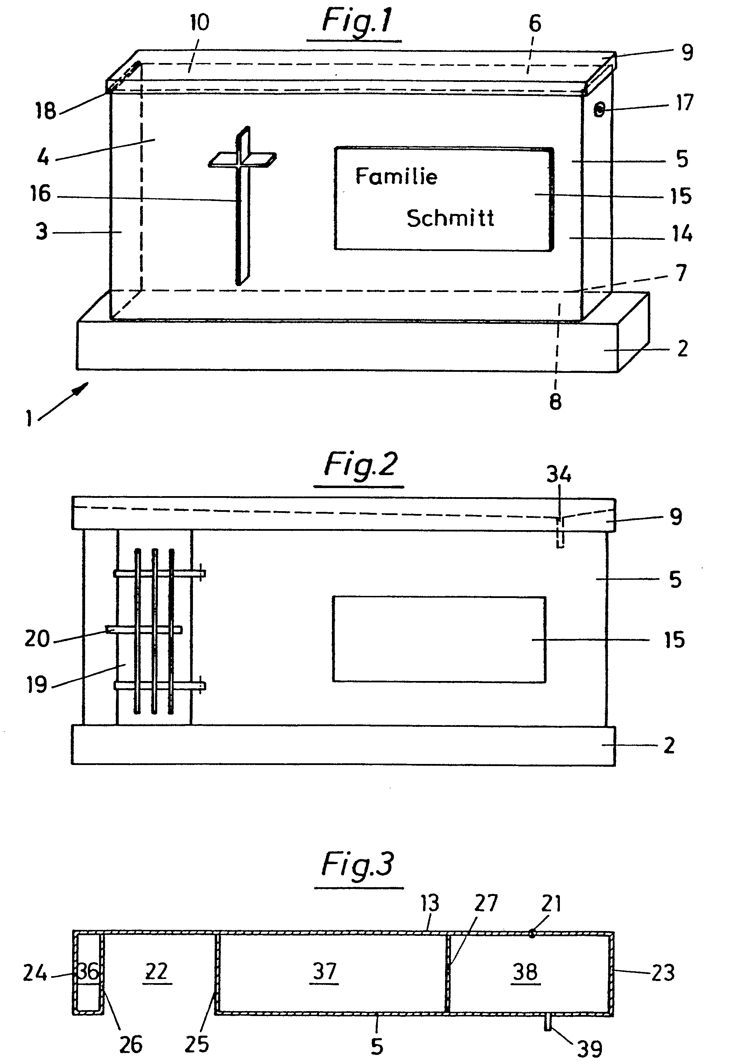

Bei dem in Fig. 1 gezeigten Grabstein 1 handelt es sich um einen aus Aluminiumblech gekanteten, auf einem Sockel 2 aufrechtstehenden Korpus 3. Der den Korpus 3 bildende Blechstreifen 4 ist rundum, insbesondere auf der Oberfläche 14 der Vorderwand 5 strukturiert ausgebildet, so dass der Grabstein 1 ein vom jeweiligen Besitzer beeinflussbares individuelles Äusseres aufweist.

Über die perspektivische Darstellung wird verdeutlicht, dass es sich bei dem Grabstein 1 um einen Hohlkörper handelt, wobei die im oberen Bereich verbliebene Öffnung 6 über die Deckplatte 9 verschlossen ist. Die unteren Ränder 7 im Bereich des Bodens 8 sind mit letzterem verschweisst oder auf ähnliche Weise möglichst wasserdicht verbunden. Der Korpus selbst kann beispielsweise mit dem Sockel verschraubt werden.

Dem Rand 10 mit dem vorzugsweise zum Verschwenken dort ausgebildeten Scharnier 18 gegenüberliegend ist ein Schloss 17 ausgebildet, über das die Deckplatte 9 so arretiert werden kann, dass der Hohlraum vor dem Zugriff Unbefugter gesichert ist.

Auf der Vorderwand 5 ist eine glatte Schriftfläche 15 zur Anbringung der Buchstaben und Ziffern belassen oder aufgesetzt, wobei eine Anbringung sowohl über Verschweissen, Verkleben oder auch Verschrauben möglich ist. Das gleiche gilt für das seitlich daneben auf der Vorderwand 5 angebrachte Kreuz 16. Die Rückwand ist mit 13 bezeichnet.

Fig. 2 zeigt eine andere Ausführungsform, bei der auf der Vorderwand 5 eine Ausnehmung 19 vorgesehen ist, die beispielsweise über das Gitter 20 verschlossen werden kann. Das Gitter ermöglicht einen teilweisen Einblick in den Innenraum bzw. die Ausnehmung 19, so dass dort beispielsweise ein Grablicht oder eine Lampe oder auch ein Blumenarrangement vor dem Zugriff Dritter gesichert aufgestellt werden kann. Das Gitter 20 ist verschwenkbar und beispielsweise über ein Schloss gesichert anzuordnen.

Fig. 3 zeigt den Korpus 3 gemäss Fig. 2 in Draufsicht bei abgenommener Deckplatte 9. Der aus einem Blechstreifen bestehende Korpus 3 ist wie verdeutlicht mehrfach und so gekantet, dass die Rückwand 13 mit den verschweissten Stosskanten 21 durchlaufend ausgebildet ist, während die Vorderwand 5 unter Bildung von Seitenwänden 25, 26 eine Nische 22 belässt. Die Seitenwände 23, 24 bilden die Aussenseiten, wobei durch eine Zwischenwand 27 eine Unterteilung des Hohlraumes in mehrere Kammern 36, 37, 38 oder Hohlräume möglich ist.

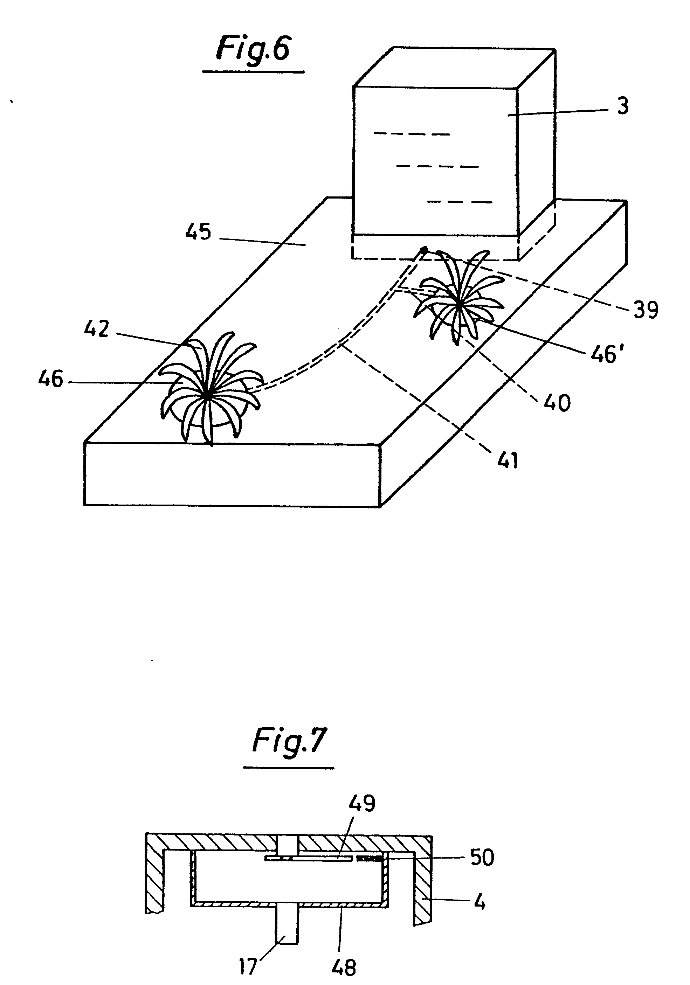

Die Deckplatte 9 ist mit Gefälle zur Seitenwand 23 hin und mit einem Rand ausgebildet. Dadurch sammelt sich das Regenwasser an der einen Seite und wird über die Bohrung 34 beispielsweise in den Hohlraum 38 oder ein darunter angeordnetes Gefäss abgeleitet und gesammelt. Wird die Kammer 38 als Wasserreservoir genutzt, so kann das Wasser über den Auslass 39 und den in Fig. 6 dargestellten Leitungen 40, 41 direkt den Pflanzen 42 zugeführt werden.

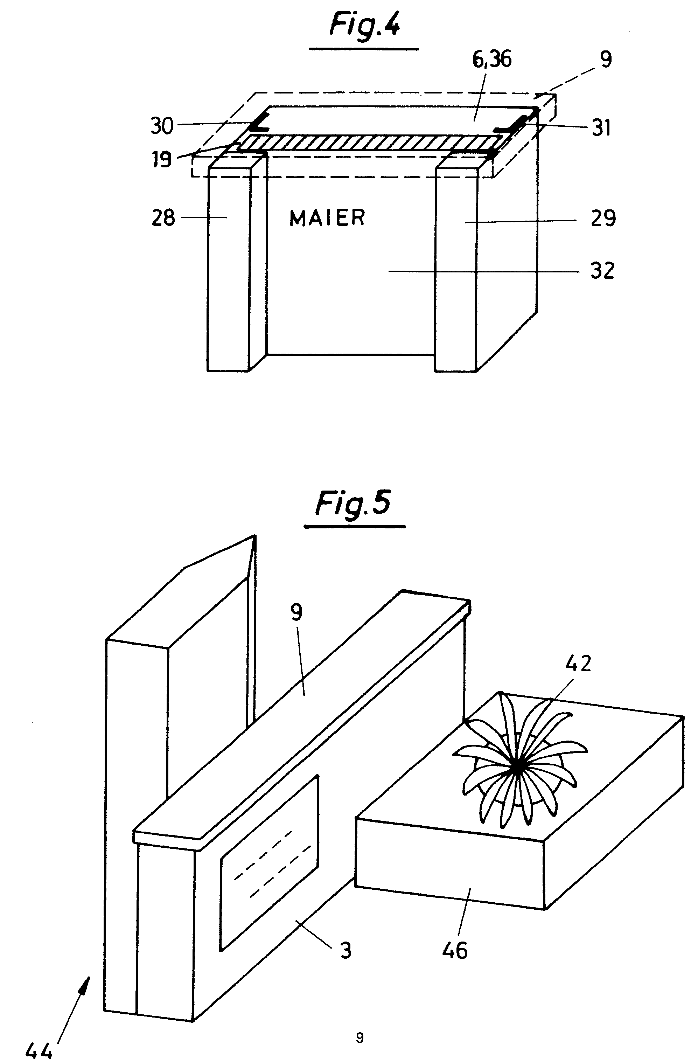

Fig. 4 zeigt eine weitere Ausbildungsmöglichkeit des Grabsteins 1, bei der der Blechstreifen 4 unter Bildung zweier Säulen 28, 29 auf der Vorderseite gekantet ist. An den Seitenwänden 23, 24 sind Winkelstücke 30, 31 vorzugsweise verschiebbar angeordnet, so dass die eingesetzte Steinplatte 32 mit der Beschriftung einfach arretiert werden kann. Hohlräume sind hier im Bereich der beiden Säulen 28, 29 und auch hinter der Steinplatte 32 gebildet, wobei beispielsweise die Hohlräume in den Säulen 28, 29 als Wasserreservoir und der Hohlraum hinter der Steinplatte für die Aufbewahrung der Gerätschaften verwendet werden kann.

Fig. 5 zeigt eine Gruppe 44 von mehreren, aus Blechstreifen 4 hergestellten Korpusteilen 3, wobei einzelne Teile der Gruppe 44 als Wasserbehälter und andere zur Aufnahme der Gerätschaften dienen. Das Behältnis 46 ist mit einer Pflanze 42 versehen, beispielsweise einer Hydrokulturpflanze, die direkt über die im Korpus 3 vorgesehenen Kammern 36, 37, 38 mit dem nötigen Wasser zu versorgen ist.

Fig. 6 zeigt eine Gruppe 44, die aus dem Korpus 3 und der Grabplatte 45 gebildet ist. Die Grabplatte 45 überdeckt die gesamte Grabstätte, wobei an beliebigen Stellen Behältnisse 46 zur Aufnahme von Pflanzen 42 vorgesehen sind. Die einzelnen Behältnisse 46 stehen mit dem Wasserreservoir bzw. dessen Auslass 39 über die Leitungen 40, 41 in Verbindung. Die Behältnisse 46, 46' werden so gleichmässig bewässert, was den Gesamteindruck der Grabstätte bzw. Grabplatte vorteilhaft beeinflusst. In Fig. 7 ist eine Schutzvorrichtung für das Schloss 17 dargestellt, wobei das Schloss bzw. der Schlosskörper versteckt und im Winkeleisen 48 gehalten angeordnet ist. Zusätzlich zum Schutz des Schlosses 17 ist eine die Bohrung oder Schlüsselöffnung in der Seitenwand verschliessende Platte 49 vorgesehen. Diese Platte 49 wird über die Feder 50 vor die Schlüsselöffnung geschoben und kann mit Hilfe des Schlüssels beim Einführen so beiseite geschoben werden, dass der dahinterliegende Schlosskörper für den Schlüssel erreichbar wird.

## Patentansprüche

1. Gedenkstein, insbesondere Grabstein für Grabstätten und Einzelgräber, dessen aus Metall gefertigter, aus mindestens einem Hohlkörper bestehender Korpus mit einer Deckplatte, einem Boden und einer verschliessbaren Ausnehmung oder Öffnung versehen ist, dadurch gekennzeichnet, dass der Korpus (3) aus einem stabilen abgekanteten Blechstreifen (4) besteht, der auf der Vorderwand (5) Einfassungen für vorzugsweise eine Steinplatte (32) bildend mehrfach gekantet und an der Stosskante (21) verbunden ist und dass die die obere Ausnehmung verschliessende Deckplatte (9) klappbar mit dem Korpus (3) verbunden ist.

2. Gedenkstein nach Anspruch 1, dadurch gekennzeichnet, dass der Blechstreifen (4) unter Bildung zweier, auf der Vorderwand (5) eine Ausnehmung (19) für die Steinplatte (32) freilassender und Hohlräume bildender Säulen (28, 29) gekantet ist und dass auf den Seitenwänden (23, 24) im Abstand dazu verstellbare Winkelstücke (30, 31) vorgesehen sind.

3. Gedenkstein nach Anspruch 1, dadurch gekennzeichnet, dass der Bleichstreifen (4) ein 3 bis 7,5 mm, vorzugsweise 5 mm Aluminiumblech ist, das mit einseitig strukturierter Oberfläche (40) gewalzt und der Stosskante (21) verschweisst ist.

4. Gedenkstein nach Anspruch 1, dadurch gekennzeichnet, dass die Deckplatte (9) allseitig einem Überstand mit erhabenem Rand und eine zu einer Seite abfallende Deckfläche mit einer zum Hohlkörper durchführenden Abflussbohrung aufweist.

5. Gedenkstein nach Anspruch 1, dadurch gekennzeichnet, dass die Deckplatte (9) um ein dem Rand (10) des Korpus (3) zugeordnetes Scharnier (18) klappbar und über ein auf der gegenüberliegenden Seite angeordnetes und über eine federbelastete Platte (49) verdecktes Schloss (17) in der unteren Endlage festlegbar ist.

## Revendications

1. Monument commémoratif, en particulier pierre tombale pour tombeaux et tombes isolées, dont le corps fabriqué en métal est constitué d'au moins un corps creux, comprenant une plaque de recouvrement et un fond et étant équipé d'une échancrure ou orifice fermant à clé, caractérisé en ce que le corps (3) est constitué d'un ruban en tôle stable (4), que son front (5) présente plusieurs arêtes adaptées à recevoir, de préférence, une plaque en pierre (32), qu'il est joint à son bord inférieur (21), et que la plaque de recouvrement (9) fermant l'échancrure en tête est attachée au corps (3) par des charnières.

2. Monument commémoratif selon la revendication 1, caractérisé en ce que le ruban en tôle (4) est plié à arête vive, formant ainsi sur son front (5) une échancrure (19) pour recevoir la plaque en pierre (32), que ladite échancrure est flanquée de deux colonnes creuses (28, 29) créées par lesdites arêtes, et que les parois latérales (23, 24) sont munies d'éléments angulaires (30, 31) ajustables par rapport auxdites colonnes.

3. Monument commémoratif selon la revendication 1, caractérisé en ce que le ruban en tôle (4) est constitué d'aluminium, d'une largeur comprise entre 3 et 7,5 mm (de préférence 5 mm), laminé de façon à présenter une surface structurée (40) et soudé au bord inférieur (21).

4. Monument commémoratif selon la revendication 1, caractérisé en ce que la plaque de recouvrement (9) est munie sur tous ses côtés d'un bord dépassant en relief, ainsi que d'une face inclinée d'un côté et présentant une perforation d'écoulement communiquant avec le corps creux.

5. Monument commémoratif selon la revendication 1, caractérisé en ce que la plaque de recouvrement (9) forme un volet mobile sur une charnière (18) fixée au bord (10) du corps (3) et pourra être ajustée à la position inférieure (finale) à l'aide d'une serrure (17) fixée au côté opposé et dissimulée par une plaque précontrainte (49).

## Claims

1. Commemorative stone, in particular tombstone for tombs and individual graves, whose metallic body is constituted of at least one hollow body with cover-plate, bottom, and lockable opening portion or orifice, characterized in that the body (3) consists of a sturdy, folded metal sheet strip (4), that its face (5) presents several foldings appropriate to accept preferably a stone slab (32), that it is jointed at its bottom edge (21), and that the cover-plate (9) closing the upper orifice is hinged to the body (3).

2. Commemorative stone according to Claim 1, characterized in that the metal sheet strip (4) is folded, thereby leaving on its face (5) an opening (19) to accept the stone slab (32), that this opening is flanked by two hollow column shapes (28, 29) created by such folding, and that the lateral walls (23, 24) are equipped with angular elements (30, 31) adjustable in relationship to above column shapes.

3. Commemorative stone according to Claim 1, characterized in that the metal sheet strip (4) consists of aluminium sheet between 3 and 7.5 mm, preferably 5 mm width, rolled with one structured surface (40) and welded to the bottom edge (21).

4. Commemorative stone according to Claim 1, characterized in that the cover-plate (9) presents, along all of its edges, a projecting relief rim and a unilaterally descending surface with a drainage boring communicating with the hollow body.

5. Commemorative stone according to Claim 1, characterized in that the cover-plate (9) forms a flap moving on a hinge (18) provided at the rim (10) of the body (3) and may be fixed in the desired lowermost (ultimate) position by means of a lock (17) mounted on the opposite side and dissimulated under a spring-loaded slab.

Fig.1

Familie

Schmitt

Fig.2

Fig.3

## Fig.4

6,36

9

30

31

19

28        MAIER        29

32

## Fig.5

9

42

3

46

44

## _Fig.6_

## _Fig.7_